# FASCICULE DE BREVET EUROPEEN

(11) **EP 3 685 455 B1**
(45) Date de publication et mention de la délivrance du brevet: **27.10.2021**
(21) Numéro de dépôt: 18780200.4
(22) Date de dépôt: 17.09.2018
(51) Int. Cl.: H01M 50/409, H01M 50/426, H01M 50/446, H01M 10/0565, H01M 10/0525

(54) **ELECTROLYTE POLYMERE SOLIDE COMPRENANT UN POLYMERE SOLVATANT, UN SEL DE LITHIUM ET UN POLYMERE HALOGENE SELECTIONNE ET BATTERIE LE COMPRENANT**
FESTER POLYMERELEKTROLYT MIT EINEM SOLVATISIERENDEN POLYMER, EINEM LITHIUMSALZ UND EINEM AUSGEWÄHLTEN HALOGENIERTEN POLYMER UND BATTERIE DAMIT
SOLID POLYMER ELECTROLYTE COMPRISING A SOLVATING POLYMER, A LITHIUM SALT AND A SELECTED HALOGENATED POLYMER, AND BATTERY COMPRISING SAME

(30) Priorité: 18.09.2017 FR 1758601
(43) Date de publication de la demande: 29.07.2020
(73) Titulaire: Blue Solutions, 29500 Ergué Gabéric (FR)
(72) Inventeur: BERNARDO, Philippe, 29000 Quimper (FR); BODENEZ, Vincent, 29140 Saint Yvi (FR); DESCHAMPS, Marc, 29000 Quimper (FR); DRU, Mathieu, 29510 Briec (FR); LECUYER, Margaud, 29120 Combrit (FR)
(74) Mandataire: IPAZ
(86) Numéro de dépôt international: PCT/FR2018/052270
(87) Numéro de publication internationale: WO 2019/053388

(56) Documents cités:
- FR-A1- 2 881 275
- US-A1- 2009 162 754

## Description

La présente invention concerne le domaine des batteries au lithium, notamment les batteries lithium-métal polymère (LMP). Elle est plus particulièrement relative à un électrolyte polymère solide pour batterie comprenant au moins un polymère solvatant des cations d'un sel de lithium, au moins un sel de lithium et au moins un polymère halogéné particulièrement sélectionné, ainsi qu'aux batteries au lithium comprenant un tel électrolyte polymère solide, notamment les batteries LMP.

De manière générale, les batteries au lithium fonctionnent par échange d'ions lithium entre une anode et une cathode, à travers un électrolyte qui comprend un sel de lithium en solution dans un solvant liquide ou dans un solvant polymère. Dans le cas particulier des batteries LMP, l'électrolyte se présente sous la forme d'un film polymère solide comprenant au moins un sel de lithium dissout dans un polymère solvatant. Outre le film d'électrolyte polymère solide, les batteries LMP comprennent également un film d'électrode positive appliqué sur un collecteur de courant, ainsi qu'une électrode négative, le film constituant l'électrolyte polymère solide étant positionné entre les deux films constituant respectivement l'électrode positive et l'électrode négative.

Un polymère est dit solvatant s'il est capable de solvater les cations du sel de lithium présent au sein du film d'électrolyte polymère solide. Les polymères constitués essentiellement par des unités oxyde d'éthylène (POE) ont été largement utilisés comme solvant des cations des sels de lithium.

Cependant, la tenue mécanique conférée par un POE au film d'électrolyte est faible, notamment dans le domaine de température dans lequel fonctionnent les batteries LMP. En outre, lors des cycles successifs de fonctionnement de la batterie, le lithium a tendance à former des dendrites, ce qui réduit fortement la durée de vie de la batterie.

C'est pourquoi, les batteries LMP utilisent généralement un électrolyte polymère solide comprenant au moins un polymère solvant des cations du sel de lithium, un sel de lithium et un second polymère, généralement halogéné, destiné à apporter de la tenue mécanique au film d'électrolyte polymère solide.

Il a par exemple déjà été proposé, notamment dans la demande de brevet US 2009/0162754, un électrolyte polymère solide pour batterie comprenant au moins un premier polymère capable de solvater un sel de lithium, un sel de lithium et un second polymère qui est au moins partiellement miscible avec le premier polymère ou rendu au moins partiellement miscible avec le premier polymère, et dans lequel au moins une partie du second polymère est cristallin ou vitreux à la température de fonctionnement de ladite batterie. A titre de second polymère cristallin, cette demande de brevet américain mentionne le polyvinylidène fluoride co-hexafluoropropylène (PVdF-HFP) et, à titre de second polymère vitreux, le polyméthylméthacrylate.

Bien que l'utilisation d'un tel électrolyte polymère solide apporte de la tenue mécanique au film d'électrolyte, sa composition n'est néanmoins pas optimisée vis-à-vis des performances globales de la batterie le comprenant. En effet, l'électrolyte a un rôle d'isolant électrique et de conducteur ionique; il ne participe pas directement aux réactions électrochimiques pendant le fonctionnement de la batterie. Toutefois, l'intégration d'un électrolyte non optimisé dans une batterie peut faire chuter drastiquement ses performances.

Or, le développement grandissant des véhicules électriques nécessite de pouvoir disposer de batteries de plus en plus performantes, en termes de puissance, de densité d'énergie et de cyclabilité.

C'est pourquoi le but de la présente invention est de fournir un électrolyte polymère solide ayant à la fois une bonne tenue mécanique et une composition optimisée pour pouvoir être avantageusement utilisé dans une batterie LMP afin de lui conférer des performances améliorées, notamment aux fortes puissances de charge.

C'est à cette occasion que les inventeurs ont mis au point l'électrolyte polymère solide qui va être décrit ci-après et qui constitue le premier objet de l'invention.

La présente invention a par conséquent pour premier objet un électrolyte polymère solide destiné à être utilisé dans une batterie au lithium, ainsi qu'une batterie au lithium, en particulier une batterie LMP, comprenant un tel électrolyte polymère solide.

L'électrolyte polymère solide selon la présente invention comprend :
- au moins un polymère P1 apte à solvater les cations d'un sel de lithium,
- au moins un sel de lithium, et
- au moins un copolymère P2 de fluorure de vinylidène et d'hexafluoropropylène (PVdf-HFP),
ledit électrolyte étant caractérisé en ce que :
- la teneur en hexafluoropropylène dans le copolymère P2 est supérieure ou égal à 19 % en masse par rapport à la masse totale du copolymère P2 ;
- la température de fusion dudit copolymère P2 est supérieure ou égale à 100°C.

Un tel électrolyte polymère solide présente une composition optimisée en ce sens que la présence du copolymère P2 permet non seulement d'améliorer les propriétés mécaniques de l'électrolyte, en particulier son allongement à la rupture, mais également les performances électrochimiques de la batterie dans lequel il est utilisé, notamment aux fortes puissances de charge.

Le polymère P1 est de préférence choisi parmi les homopolymères et les copolymères d'oxyde d'éthylène, d'oxyde de méthylène, d'oxyde de propylène, d'épichlorhydrine et d'allylglycidyléther. Parmi de tels polymères P1, les homopolymères d'oxyde d'éthylène (POE) sont particulièrement préférés.

Le polymère P1 représente de préférence de 30 à 70 % en masse, et encore plus préférentiellement de 45 à 55 % en masse, par rapport à la masse totale de l'électrolyte polymère solide.

Selon une forme de réalisation préférée de l'invention, la teneur en hexafluoropropylène dans le copolymère P2 varie de 19 à 50 % en masse inclusivement par rapport à la masse totale dudit copolymère P2, et encore plus préférentiellement, de 19 à 30 % en masse inclusivement.

La température de fusion du copolymère P2 varie de préférence de 100°C à 150 °C, et encore plus préférentiellement est proche de 110-125°C.

Selon une forme de réalisation tout particulièrement préférée de l'invention, le copolymère P2 comprend 19 % en masse d'hexafluoropropylène par rapport à la masse totale dudit copolymère et a une température de fusion proche de 125°C.

Le copolymère P2 représente de préférence de 2 à 30 % en masse, et encore plus préférentiellement de 5 à 15 % en masse, par rapport à la masse totale de l'électrolyte polymère solide.

Le sel de lithium peut être notamment choisi parmi LiBF₄, LiPF₆, le bis(trifluorométhylsulfonyl)imide de lithium (LiTFSI), le bis(fluorosulfonyl)imide de lithium (LiFSI), le bis(pentafluoroéthylsulfonyl)imide (LiBETI), LiAsF₆, LiCF₃SO₃, LiSbF₆, LiSbCl₆, Li₂TiCl₆, Li₂SeCl₆, Li₂B₁₀Cl₁₀, Li₂B₁₂Cl₁₂, et le bis(oxalato)borate de lithium (LiBOB).

Le sel de lithium représente de préférence de 2 à 20 % en masse, et encore plus préférentiellement de 5 à 15 % en masse, par rapport à la masse totale de l'électrolyte polymère solide.

Bien entendu, l'électrolyte polymère solide peut contenir des additifs classiquement utilisés dans les électrolytes solides polymères, tels que des charges destinées à renforcer la tenue mécanique. A titre d'exemple, on peut citer MgO, TiO₂, SiO₂, BaTiO₃ ou Al₂O₃.

L'électrolyte polymère solide conforme à la présente invention peut avantageusement être fabriqué par mélange de ses différents constituants dans les proportions appropriées, par exemple par extrusion, à l'aide d'une extrudeuse monovis ou d'une extrudeuse bi-vis.

La batterie au lithium qui constitue le second objet de la présente invention comprend un film d'un électrolyte polymère solide tel que défini selon le premier objet de l'invention, ledit film étant placé entre un film constituant une électrode négative et un film constituant une électrode positive, ladite électrode positive étant éventuellement au contact d'un collecteur de courant.

Dans les batteries au lithium selon la présente invention, l'épaisseur des films qui constituent les différents éléments de la batterie est en général de l'ordre de 1 à une centaine de micromètres. De préférence, le film d'électrolyte polymère solide a une épaisseur de 1 à 50 µm, et de préférence de 2 à 20 µm.

Selon une forme de réalisation préférée de l'invention, la batterie au lithium est une batterie LMP.

Dans une batterie LMP selon l'invention, l'électrode négative peut être constituée par du lithium métallique, ou par l'un de ses alliages.

La matière active de l'électrode positive peut être choisie parmi les oxydes de vanadium VOₓ (2 ≤ x ≤ 2,5), LiV₃O₈, Li_{y}Ni₁₋ₓCoₓO₂, (0 ≤ x ≤ 1 ; 0 ≤ y ≤ 1), les spinelles de manganèse Li_{y}Mn₁₋ₓMₓO₂ (M = Cr, Al, V, Ni, 0 ≤ x ≤ 0,5 ; 0 ≤ y ≤ 2), les polydisulfures organiques, FeS, FeS₂, le sulfate de fer Fe₂(SO₄)₃, les phosphates et phosphosilicates de fer et de lithium de structure olivine, ou leurs produits de substitution du fer par le manganèse, utilisés seuls ou en mélanges. Le collecteur de l'électrode positive est de préférence en aluminium, éventuellement revêtu d'une couche carbonée.

La présente invention est illustrée par les exemples suivants, auxquels elle n'est cependant pas limitée.

### Exemple 1 : Préparation d'un film d'électrolyte polymère solide conforme à l'invention

On a préparé un film de d'électrolyte polymère solide conforme à la présente invention ayant la composition massique suivante :

| | |
|---|---|
| - Polyoxyde d'éthylène vendu sous la dénomination commerciale | 48 % |
| POE par la société Aldrich... | |
| - PVdF-HFP 81/19 vendu sous la dénomination commerciale | ...40 % |
| Kynar® superflex 2500 par la société ARKEMA | |
| - Bis(trifluorométhylsulfonyl)imide de lithium (LiTFSI) vendu | 12 % |
| par la société Aldrich | |

On a ainsi obtenu, par extrusion, un film d'électrolyte polymère solide conforme à la présente invention dont l'épaisseur était de 20 µm (film **EPS 1**).

### Exemple 2 : Préparation de films d'électrolyte polymère solide comparatifs

On a reproduit le mode opératoire de l'exemple 1 en remplaçant le PVdF-HFP 81/19 utilisé ci-dessus à l'exemple 1, par la même quantité d'un PVdF-HFP 85/15 vendu sous la dénomination commerciale Solef® 21510 par la société SOLVAY (Film **EPS** 2), ainsi que par la même quantité d'un PVdF-HFP 84/16 vendu sous la dénomination commerciale Kynar® flex 2751 par la société ARKEMA (Film **EPS 3**).

Chacun des films **EPS 2** et **EPS 3** présentait également une épaisseur de 20 µm.

### Exemple 3 : Etude des propriétés électrochimiques d'une batterie conforme à l'invention contenant le film d'électrolyte EPS 1 et comparaison avec des batteries non conformes à l'invention comprenant les films d'électrolyte EPS 2 ou EPS 3

Dans cet exemple, on a comparé les propriétés électrochimiques d'une batterie **B1** conforme à l'invention comprenant le film d'électrolyte polymère **EPS 1** tel que préparé ci-dessus à l'exemple 1, à celles de batteries comparatives non conformes à l'invention comprenant soit le film d'électrolyte polymère **EPS 2** tel que préparé ci-dessus à l'exemple 2 (batterie **B2)** soit le film d'électrolyte polymère **EPS 3** tel que préparé ci-dessus à l'exemple 2 (batterie **B3).**

Dans les batteries **B1, B2** et **B3,** l'électrode négative est un film de lithium métallique ayant une épaisseur de 30 µm. L'électrode positive est un film de 70 µm d'un matériau composite placé sur un collecteur de courant en aluminium revêtu d'une couche carbonée, ledit matériau composite comprenant 70% en masse de LiFePO₄ comme matière active d'électrode, ainsi que 7% en masse de sel de lithium, 2% en masse de carbone et 21% en masse de polymère.

Les batteries **B1, B2** et **B3** respectivement ont été préparées par colaminage des films **EPS 1, EPS 2** et **EPS 3** respectivement, avec le film de lithium et le film formant l'électrode positive.

La capacité initiale de chacune des batteries **B1, B2** et **B3** a été mesurée en déchargeant à faible régime (régime équivalent à une décharge complète en 10 heures). Par la suite, les performances en charge de ces trois batteries ont été mesurées en alternant des décharges à faibles courants (C/10) et des charges à différents régimes.

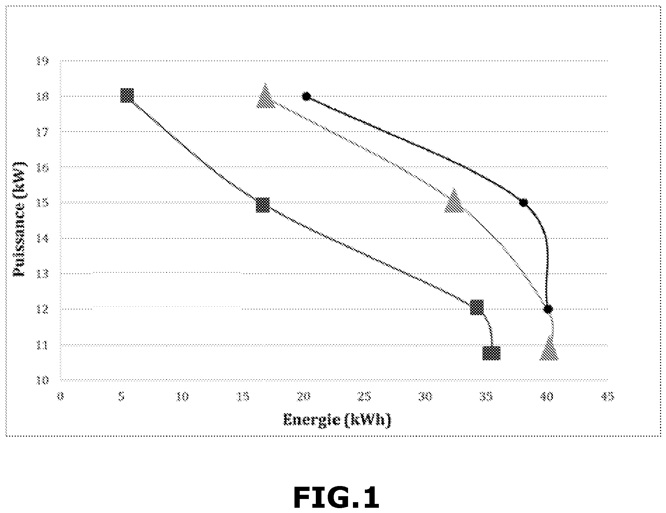

Les résultats correspondants sont donnés sur la figure 1 annexée sur laquelle la puissance (en kW) est fonction de l'énergie (kWh). Sur cette figure, la courbe avec les cercles pleins correspond à la batterie **B1** conforme à la présente invention, celle avec les triangles pleins à la batterie comparative **B2** ne faisant pas partie de l'invention, et celle avec les carrés pleins à la batterie comparative **B3** ne faisant pas partie de l'invention.

Ces résultats montrent des différences notables de performances électrochimiques entre la batterie **B1** conforme à la présente invention, c'est-à-dire comprenant un électrolyte polymère solide **EPS 1** à base d'un polymère solvatant, d'un sel de lithium et d'un copolymère P2 PVdf-HFP dans lequel la teneur en hexafluoropropylène est supérieure ou égal à 19 % en masse par rapport à la masse totale du copolymère P2, et les batteries **B2** et **B3** non conformes à l'invention, c'est-à-dire comprenant respectivement un électrolyte polymère solide **EPS 2** ou **EPS 3** dans lesquels le copolymère PVdf-HFP ne comprend respectivement que 15 % ou 16 % en masse d'hexafluoropropylène. Ces différences sont particulièrement significatives aux fortes puissances.

Ainsi, ces résultats démontrent que l'utilisation d'un électrolyte polymère solide conforme à l'invention comprenant un copolymère P2 PVdF-HFP dans lequel la teneur en hexafluoropropylène est supérieure ou égale à 19 % en masse par rapport à la masse totale dudit copolymère P2, permet d'améliorer significativement les performances électrochimiques de la batterie.

## Revendications

1. Electrolyte polymère solide comprenant :
- au moins un polymère P1 apte à solvater les cations d'un sel de lithium,
- au moins un sel de lithium, et
- au moins un copolymère P2 de fluorure de vinylidène et d'hexafluoropropylène (PVdf-HFP),
ledit électrolyte étant **caractérisé en ce que** :
• la teneur en hexafluoropropylène dans le copolymère P2 est supérieure ou égal à 19 % en masse par rapport à la masse totale du copolymère P2 ;
• la température de fusion dudit copolymère P2 est supérieure ou égale à 100°C.

2. Electrolyte polymère solide selon la revendication 1, **caractérisé en ce que** le polymère P1 est choisi parmi les homopolymères et les copolymères d'oxyde d'éthylène, d'oxyde de méthylène, d'oxyde de propylène, d'épichlorhydrine et d'allylglycidyléther.

3. Electrolyte polymère solide selon la revendication 1 ou 2, **caractérisé en ce que** le polymère P1 est choisi parmi les homopolymères d'oxyde d'éthylène.

4. Electrolyte polymère solide selon l'une quelconque des revendications 1 à 3, **caractérisé en ce que** la teneur en hexafluoropropylène dans le copolymère P2 varie de 19 à 50 % en masse inclusivement par rapport à la masse totale dudit copolymère P2.

5. Electrolyte polymère solide selon l'une quelconque des revendications 1 à 4, **caractérisé en ce que** la température de fusion du copolymère P2 varie de 100 à 150°C.

6. Electrolyte polymère solide selon l'une quelconque des revendications 1 à 5, **caractérisé en ce que** le copolymère P2 comprend 19 % en masse d'hexafluoropropylène par rapport à la masse totale dudit copolymère et a une température de fusion de 110 à 125°C.

7. Electrolyte polymère solide selon l'une quelconque des revendications 1 à 6, **caractérisé en ce que** le copolymère P2 représente de 2 à 30 % en masse par rapport à la masse totale de l'électrolyte polymère solide

8. Electrolyte polymère solide selon l'une quelconque des revendications 1 à 7, **caractérisé en ce que** le sel de lithium est choisi parmi LiBF₄, LiPF₆, le bis(trifluorométhylsulfonyl)imide de lithium, le bis(fluorosulfonyl)imide de lithium, le bis(pentafluoroéthylsulfonyl)imide, LiAsF₆, LiCF₃SO₃, LiSbF₆, LiSbCl₆, Li₂TiCl₆, Li₂SeCl₆, Li₂B₁₀Cl₁₀, Li₂B₁₂Cl₁₂, et le bis(oxalato)borate de lithium.

9. Electrolyte polymère solide selon l'une quelconque des revendications 1 à 8, **caractérisé en ce que** le sel de lithium représente de 2 à 20 % en masse par rapport à la masse totale de l'électrolyte polymère solide.

10. Batterie au lithium comprenant un film d'un électrolyte polymère solide, ledit film étant placé entre un film constituant une électrode négative et un film constituant une électrode positive, ladite électrode positive étant éventuellement au contact d'un collecteur de courant, ladite batterie étant **caractérisée en ce que** ledit film d'électrolyte polymère solide est un film d'un électrolyte polymère solide tel que défini à l'une quelconque des revendications 1 à 9.

11. Batterie au lithium selon la revendication 10, **caractérisée en ce que** le film d'électrolyte polymère solide a une épaisseur de 1 à 50 µm.

12. Batterie au lithium selon la revendication 10 ou 11, **caractérisée en ce que** ladite batterie est une batterie lithium-métal-polymère.

## Patentansprüche

1. Fester Polymerelektrolyt enthaltend:
- mindestens ein Polymer P1, das dazu geeignet ist, die Kationen eines Lithiumsalzes zu solvatisieren,
- mindestens ein Lithiumsalz, und
- mindestens ein Copolymer P2 aus Vinylidenfluorid und Hexafluorpropylen (PVDF-HFP),
wobei der Elektrolyt **dadurch gekennzeichnet ist, dass**:
• der Gehalt an Hexafluorpropylen im Copolymer P2 größer oder gleich 19 Masse-%, bezogen auf die Gesamtmasse des Copolymers P2, ist;
• die Schmelztemperatur des genannten Copolymers P2 größer oder gleich 100°C ist.

2. Fester Polymerelektrolyt nach Anspruch 1, **dadurch gekennzeichnet, dass** das Polymer P1 ausgewählt ist aus Homopolymeren und Copolymeren von Ethylenoxid, Methylenoxid, Propylenoxid, Epichlorhydrin und Allylglycidylether.

3. Fester Polymerelektrolyt nach Anspruch 1 oder 2, **dadurch gekennzeichnet, dass** das Polymer P1 ausgewählt ist aus Ethylenoxid-Homopolymeren.

4. Fester Polymerelektrolyt nach einem der Ansprüche 1 bis 3, **dadurch gekennzeichnet, dass** der Gehalt an Hexafluorpropylen im Copolymer P2 im Bereich von 19 bis einschließlich 50 Masse-%, bezogen auf die Gesamtmasse des Copolymers P2, liegt.

5. Fester Polymerelektrolyt nach einem der Ansprüche 1 bis 4, **dadurch gekennzeichnet, dass** die Schmelztemperatur des Copolymers P2 im Bereich von 100 bis 150°C liegt.

6. Fester Polymerelektrolyt nach einem der Ansprüche 1 bis 5, **dadurch gekennzeichnet, dass** das Copolymer P2 19 Masse-% Hexafluorpropylen, bezogen auf die Gesamtmasse des Copolymers, enhält und eine Schmelztemperatur von 110 bis 125°C besitzt.

7. Fester Polymerelektrolyt nach einem der Ansprüche 1 bis 6, **dadurch gekennzeichnet, dass** das Copolymer P2 2 bis 30 Masse-%, bezogen auf die Gesamtmasse des festen Polymerelektrolyten, ausmacht.

8. Fester Polymerelektrolyt nach einem der Ansprüche 1 bis 7, **dadurch gekennzeichnet, dass** das Lithiumsalz ausgewählt ist aus LiBF₄, LiPF₆, Lithium-bis(trifluormethylsulfonyl)imid, Lithium-bis(fluorsulfonyl)imid, Bis(pentafluorethylsulfonyl)imid, LiAsF₆, LiCF₃SO₃, LiSbF₆, LiSbCl₆, Li₂TiCl₆, Li₂SeCl₆, Li₂B₁₀Cl₁₀, Li₂B₁₂Cl₁₂ und Lithium-bis(oxalato)borat.

9. Fester Polymerelektrolyt nach einem der Ansprüche 1 bis 8, **dadurch gekennzeichnet, dass** das Lithiumsalz 2 bis 20 Masse-%, bezogen auf die Gesamtmasse des festen Polymerelektrolyten, ausmacht.

10. Lithiumbatterie umfassend einen Film aus einem festen Polymerelektrolyten, wobei der Film zwischen einem Film, der eine negative Elektrode bildet, und einem Film, der eine positive Elektrode bildet, angeordnet ist, wobei die positive Elektrode gegebenenfalls einen Stromkollektor kontaktiert, wobei die Batterie **dadurch gekennzeichnet ist, dass** der Film aus dem festen Polymerelektrolyten ein Film aus einem festen Polymerelektrolyten wie in einem der Ansprüche 1 bis 9 definiert ist.

11. Lithiumbatterie nach Anspruch 10, **dadurch gekennzeichnet, dass** der Film aus dem festen Polymerelektrolyten eine Dicke von 1 bis 50 µm besitzt.

12. Lithiumbatterie nach Anspruch 10 oder 11, wobei die Batterie eine Lithium-Metall-Polymer-Batterie ist.

## Claims

1. Solid polymer electrolyte comprising:
- at least one polymer P1 capable of solvating the cations of a lithium salt,
- at least one lithium salt, and
- at least one copolymer P2 of vinylidene fluoride and of hexafluoropropylene (PVdf-HFP),
said electrolyte being **characterized in that**:
• the hexafluoropropylene content in the copolymer P2 is greater than or equal to 19% by weight relative to the total weight of the copolymer P2;
• the melting point of said copolymer P2 is greater than or equal to 100°C.

2. Solid polymer electrolyte according to Claim 1, **characterized in that** the polymer P1 is chosen from homopolymers and copolymers of ethylene oxide, of methylene oxide, of propylene oxide, of epichlorohydrin and of allyl glycidyl ether.

3. Solid polymer electrolyte according to Claim 1 or 2, **characterized in that** the polymer P1 is chosen from ethylene oxide homopolymers.

4. Solid polymer electrolyte according to any one of Claims 1 to 3, **characterized in that** the hexafluoropropylene content in the copolymer P2 ranges from 19 to 50% by weight inclusive, relative to the total weight of said copolymer P2.

5. Solid polymer electrolyte according to any one of Claims 1 to 4, **characterized in that** the melting point of the copolymer P2 ranges from 100 to 150°C.

6. Solid polymer electrolyte according to any one of Claims 1 to 5, **characterized in that** the copolymer P2 comprises 19% by weight of hexafluoropropylene relative to the total weight of said copolymer and has a melting point of from 110 to 125°C.

7. Solid polymer electrolyte according to any one of Claims 1 to 6, **characterized in that** the copolymer P2 represents from 2 to 30% by weight relative to the total weight of the solid polymer electrolyte.

8. Solid polymer electrolyte according to any one of Claims 1 to 7, **characterized in that** the lithium salt is chosen from LiBF₄, LiPF₆, lithium bis(trifluoromethylsulfonyl)imide, lithium bis(fluorosulfonyl)imide, bis(pentafluoroethylsulfonyl)imide, LiAsF₆, LiCF₃SO₃, LiSbF₆, LiSbCl₆, Li₂TiCl₆, Li₂SeCl₆, Li₂B₁₀Cl₁₀, Li₂B₁₂Cl₁₂ and lithium bis(oxalato)borate.

9. Solid polymer electrolyte according to any one of Claims 1 to 8, **characterized in that** the lithium salt represents from 2 to 20% by weight relative to the total weight of the solid polymer electrolyte.

10. Lithium battery comprising a film of a solid polymer electrolyte, said film being placed between a film constituting a negative electrode and a film constituting a positive electrode, said positive electrode being optionally in contact with a current collector, said battery being **characterized in that** said solid polymer electrolyte film is a film of a solid polymer electrolyte as defined in any one of Claims 1 to 9.

11. Lithium battery according to Claim 10, **characterized in that** the solid polymer electrolyte film has a thickness of from 1 to 50 µm.

12. Lithium battery according to Claim 10 or 11, **characterized in that** said battery is a lithium-metal-polymer battery.
